# EUROPEAN PATENT APPLICATION

(11) **EP 1 829 455 A1**
(43) Date of publication of application: **05.09.2007**
(21) Application number: 07101109.2
(22) Date of filing: 11.06.2003
(51) Int. Cl.: A23L 1/16, A23P 1/12, A23P 1/08, A21D 13/08

(54) **Pasta compositions**

(30) Priority: 03.07.2002 EP 02077644
(62) Divisional of application: 03762485.5
(71) Applicant: UNILEVER N.V., 3013 AL Rotterdam (NL); UNILEVER PLC, London, Greater London EC4P 4BQ (GB)
(72) Inventor: Latza, Stefan, Knorrstrasse 1, 74074 Heilbronn (DE); Sailer, Winfried, Knorrstrasse 1, 74074 Heilbronn (DE)
(74) Representative: Wurfbain, Gilles L.

(57) **Abstract**

Pasta products having novel shape and methods for preparing the same. In particular, networks of pasta can be prepared (e.g. by extrusion), which may be used for filled pasta. The technique allows for macropores to be formed, which can improve rehydration, heating up, and thawing of pasta particles.

## Description

### Field of the invention

The present invention relates to pasta products (optionally filled) with novel physical shape, and method(s) for preparing the same.

### Background of the invention

Pasta products are well-known staple products, made from a variety of carbohydrate- or starch sources (usually wheat flour or semolina), and manufactured in a variety of physical shapes. Among such shapes are simple thin ropes of circular dimension (e.g. spaghetti), flat ropes/ribbon-like (e.g. tagliatelle), which are optionally curled up to nests, individual macaroni particles of various shapes, filled particles such as ravioli and fagottini, etcetera.

Many of such pasta products are used in snack foods, which are designed to be ready by soaking a few minutes in hot water, or cooking for a few minutes. Also, for non-snack applications quick-cooking pasta products are known. One of the problems with such pasta products is that the individual particles are limited in thickness, so as to ensure optimal rehydration and gelatinisation and heating as the products as sold are usually dehydrated and (partly) ungelatinised. Also, if quick-cooking filled dry pasta products are desired then a common problem is re-hydration of the filling material, which is completely surrounded by pasta dough material, which needs to rehydrate and pass water first, which does not go well for quick cooking pasta products.

There is a need for pasta products of substantial size, yet such that short cooking times are required (e.g. for instant or quick cooking varieties). Likewise, when pasta is used in applications with filling (e.g. ravioli, fagottini) it is desired that the content is also heated and rehydrated quickly. Furthermore, there is a continuous desire for foods in new shapes and appearances.

Similarly, there is a need for (deep) frozen pasta which allows quicker and/or easier thawing.

US 5,693,351 (= EP439806, Nestlé) discloses filled (dried) pasta types which posses good rehydration, also of the filling. To this end, the particles are a pasta envelope prepared from 2 superposed leaves of pasta (or one folded double), in which a filling is introduced, after which the envelope is sealed around its periphery e.g. by crimping of the edges. The sealing is done such that an opening is provided in the seal. This may lead to e.g. ravioli type pasta, with an opening for good rehydration.

EP 970617 (Barilla) describes a method for producing filled pasta having improved rehydration. This is achieved by providing a piece of pasta sheet, provide a notch in the peripheral portion of the sheet, add a filling material, fold the pasta sheet to a pouch type object, seal the edges.

US 5,728,418 (= EP 717934) describes the preparation of a quick cooking pasta in helix shape. Although the pasta has a central hole, it is not a filled product.

WO 93/25089 describes food products which consists of layers of parallel hollow tubes, similar as a honeycomb. It is disclosed pasta may be shaped like this, facilitating eating it with a sauce.

US 5,518,749 describes equipment and a method for extruding ready-to-eat cereals using a rotary die. The products that can be prepared using such equipment can have e.g. a braided appearance.

Various references disclose extrusion/shaping of dough for baked goods: US 4,536,147, WO 01/10227, US 6,036,990, US 5,874,120, US 5,492,706, or ice cream: US 4,913,645.

Similarly, US 5670185 describes rotary die equipment for extruding edible substances, such as ice cream. Various shapes can be produced using such equipment, such as twisted articles, with or without filling. Of the products disclosed, the extruded strands with filling are single stranded items, the multi-stranded twisted products are unfilled.

Equipment for producing extrudates of twisted material (e.g. dough) are also disclosed in US 4,445,838 and US 4,288,463, e.g. for producing pretzels.

US 4,563,358 discloses composite food products (e.g. snack products) comprising a tube of confectionary material in net-like shape and a filling within the tube.

### Summary of the invention

It has now been found that the above objective may be met (at least to some extent) by an edible product of which at least part is formed by a network or mesh-like structure of pasta, wherein the network comprises at least two (preferably at least 4) parallel filamentous pasta elements under an angle of 5-90 degrees to at least two (preferably at least 4) other parallel filamentous pasta elements. In alternative wording, the network comprises open space divided by filamentous elements of pasta. Such pasta networks may extend over considerable distances, and still have individual parts which are sufficiently thin for quick cooking purposes.

In the product according to the invention, pasta is to be understood to be the product generally (i.e. by the the average consumer in e.g. Europe, US, Canada, Australia) known as "pasta" in connection to food, and this is also how it is often referred to in cooking literature aimed at the consumer. Examples of such conventional pasta (although in different physical shapes) are spaghetti, macaroni, ravioli, tortelini, fagottini, farfale, lasagna sheets, etcetera. It is generally accepted that pasta in this connection is originating from the Italian cuisine, but now consumed in a large number of countries.

Such a conventional (in composition, not shape) pasta may be prepared from dough which may comprise (as wt% of the pasta dough):
- starch source: 55 - 85%, preferably 60 - 75%,
- protein: 0-15%,
- water: 15-65%, preferably 25-45%

In the above, the water may be added as such, or as part of one of the other ingredients, e.g. as part of fresh egg/eggwhite, and it also includes the moisture naturally present in starch sources such as flour or semolina (hence the calculation as "total moisture of the pasta"). The pasta (i.e. as part or all of the starch source) preferably comprises hard wheat flour and/or hard wheat semolina, as this usually gives the pasta with the most traditional taste and mouthfeel and cooking properties. A preferred source for that flour or semolina is durum wheat (Triticum durum). The protein may be external (e.g. added as such) or be part of the starch source, e.g. if flour is used as starch source the gluten in the flour can be part of the protein for the products according to the invention. Optionally, other components like salt (0.01-5% wt), whole egg, hydrocolloids, fibres, emulsifiers, colorants, herbs and spices may be present. For some purposes, it may be preferred that a dough is used which contains less than 35% of water.

The pasta as shaped can be further treated as known in the art of industrially manufacturing pasta, e.g. pre-cooking, drying, packaging, sterilising and other steps.

The invention further relates to an edible product of which part is formed by a network of pasta, wherein the network comprises filamentous elements of pasta and which network partially covers a filling material. The present invention does not relate to confectionary products.

When applied for making filled pasta, the holes in the network may allow quick access of water to the filling, which is suitable for quick rehydration in dry applications and quick cooking in applications where the filling needs to be exposed to hot/boiling water for sufficient time. In case of frozen pasta, the holes may allow easier or quicker thawing and heating of the pasta and/or filling.

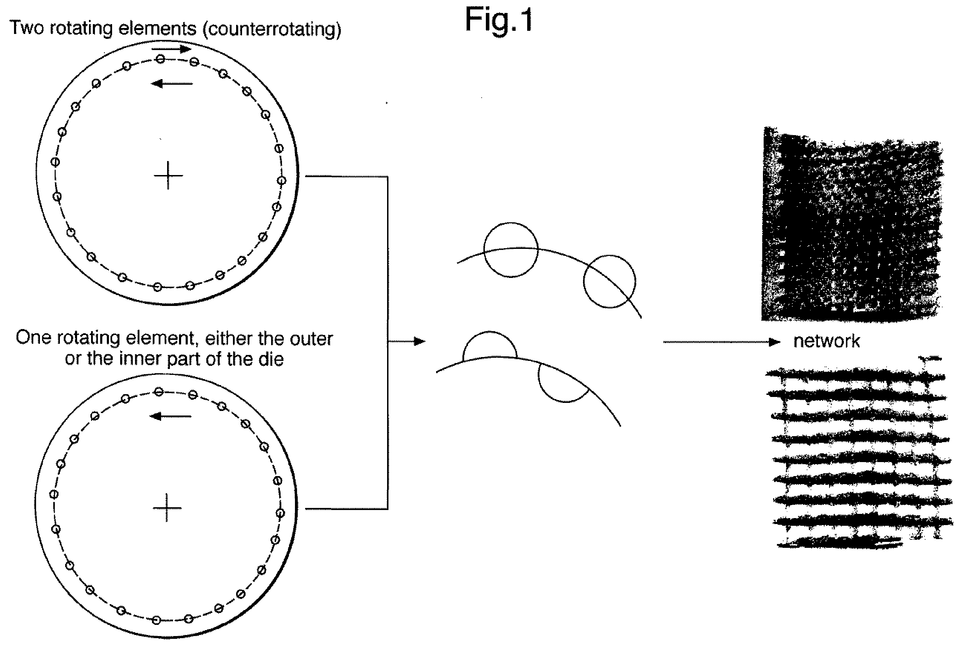

The products according to the invention may be prepared by a process for preparing a pasta product in a network- or mesh-like structure by extruding a pasta dough through a die, which die has two concentric elements of which at least one is rotatable or rotating relative to the other, and which die has a plurality of openings on the interface between the two concentric elements. In the die arrangement according to the above, there are preferably at least 4 openings, more preferably at least 8 on the interface between the two concentric elements. This is exemplified schematically in figure 1.

In case a filled pasta is prepared according to the invention, the process as above may further comprise a step wherein a filling is shaped and partially covered by the network material. The filling is preferably co-extruded with the pasta dough.

### Detailed description of the invention

The networks according to the invention may suitably be prepared by techniques known in the art of textile processing, plastic processing, but also food processing applications such as are used for cereals, pretzels, cookies, pastries, etcetera. Examples of such techniques are weaving, knitting the filamentous elements, or by extruding or pressing the whole network (or parts thereof).

The products according to the invention may suitably be prepared by a process for preparing an edible product comprising pasta, the process comprising at least the steps of:
- preparing at least two filamentous elements (a) and (b) of pasta,
- intermittently joining the filamentous elements (a) and (b) to form a substantially continuous network by weaving, knitting, tying, braiding, twisting, spinning, knotting, interlocking, interconnecting, interweaving, web extrusion or combinations of such techniques,
- optionally cutting the resulting product.
   In the above, it may be preferred that the preparation of the filamentous elements of pasta (a) and (b) is obtained by extrusion. In the above, to obtain the network it is preferred that for extrusion a die is used having multiple openings, and although some openings may be stationary, it is also preferred that at least part of the openings are moved in a continuous (e.g. by rotating part or all of the die) or repetitive (e.g. where one part of the die moves back and forth) movement. The particles so-obtained may be described as braids, ropes, knitwork, or similar, with filamentous elements of pasta (pasta threads or strands) as the basic material to form the braids, ropes, knitwork, webs, or similar.

Preferably, the network in the product according to the invention has a regular repeating pattern. This can suitably be formed as set out above, e.g. by having at least filamentous elements of pasta which filamentous elements are interlocking, interconnecting, or interwoven. This may lead to various structures, such as e.g. mesh- or web-like surfaces or structures. It is preferred that the network of pasta according to the invention is substantially continuous. Filamentous elements or strands are herein to be understood to be parts of pasta having a round, oval or rope-like structure or a flat, ribbon-like structure. Such structures are e.g. obtainable by extrusion. Although the word rope or ribbon suggests a certain length (like spaghetti) the filamentous elements can be short, e.g. 0.5 mm-10 mm. Suitably, such filamentous elements may have a length (measured over the entire pasta element) of at least 2 mm and/or a diameter of at least 0.3 (preferably at least 0.6) mm (upon shaping into the network according to the invention).

A network can be seen as a combination of open space divided by the network material (here:
pasta). Regarding the networks which are part of the products according to this invention, the ratio of pasta : open space in the pasta network per square unit is between 1:10 and 5:1, preferably between 1:6 and 3:1, when the pasta is dry, ambient stable.

Without wishing to be bound by theory, it is thought that the specific structure of the pasta material according to the invention is such that pasta particles can be prepared which (to the eye) have a large size or thickness, whilst the structure is such that the surface area per weight is high enough to ensure quick cooking and/or rehydration and/or thawing. Such structures can be described as pasta particles having macropores. Such pores may have a size of at least 1 mm².

The pasta according to the invention can be made into various types of products, e.g. ambient stable pasta, chilled stable pasta, frozen pasta, quick-cooking pasta, or instant pasta. The pasta networks according to the invention may be in particular suitable for preparing filled pasta products, in particular of the quick cooking or instant type, as well as frozen pasta. In such case, the edible product according to the invention comprises a filling covered by the network of pasta. In this, said filling may comprise meat, cheese, egg, starch, vegetable matter, flavours, herbs, spices, bread crumbs, potato granules, fat, vegetable fibres, bouillon-or broth concentrates, or mixtures thereof. In the case a filling is used in the products according to the invention that may be achieved by a process in which the edible filling material is introduced after the formation of the network. Also, simultaneous formation of the pasta network and assembly with the filling material is possible. The filling material may be formed/shaped and optionally combined with the pasta network by (co)extrusion filling and pasta network, or by wrapping the pasta network around the filling material.

The pasta as shaped can be further treated as known in the art of industrially manufacturing pasta, e.g. pre-cooking, drying, packaging, sterilising and other steps. The water content (of the pasta network in the product as offered for sale) may show a wide variation, depending upon whether the product is offered and used as fresh, chilled dee frozen or ambient stable product, or as a dried, optionally pre-cooked product (e.g. instant). Typical moisture contents (wt %) of the pasta network in the final product as offered for sale are:
fresh: 40-85%, preferably 50-75% (semi wet- wet)
deep frozen: 50-85%, preferably 60-75%
dry: 3-18%, preferably 5-12,5%
instant (ramen/fat fried): 0.5-15%, preferably 3-8%.

Depending upon the consistency of the filling, the size of individual particles, the size of the pores of the network, and the solubility of the filling part of the filling may leach out during cooking or rehydration. This may actually be used when the filling is e.g. a soup, bouillon or broth concentrate. The pasta provides a garnishing, and (part of) the filling dissolves or leaches out into the cooking water.

Although the product according to the invention may be used for fresh or chilled stable products or frozen products, the advantages of using the network pasta are particularly relevant for dry pasta. Such dry pasta will usually have a water content of 1 to 15 %wt. The pasta may be quick-cooking pasta, or instant pasta. In case of the pasta being dry, it usually needs to be rehydrated in an aqueous medium with application of heat (or steam), before consumption. Reason why the technique according to the invention is very suitable for filled quick cooking and instant pasta is that the holes or macropores may allow rehydration/contacting with hot water of the filling material, which is difficult for filled pasta which do not have macropores. Furthermore, it was found that depending upon the size of the holes, they may control water uptake by the filling, in a way that the pasta may swell upon rehydration and thus block the holes after a predetermined water uptake. For (deep-)frozen pasta the advantage may be that quicker thawing and heating is achieved, again due to access via pores. Thus, the invention further relates to products as set out above, which are rehydratable or deep frozen and should be heated in aqueous medium or steam before consumption.

Another advantage of the pasta networks according to the present invention in combination with a filling is that upon purchase and when starting preparation the filling material is visible by the consumer through the macropores of the network. This is in particular an advantage for dry, shelf stable or instant pasta, fresh, chilled pasta but also frozen pasta.

In the compositions according to the invention the amount of fats/oils is preferably below 15%, and more preferably below 5% (as wt% as calculated upon shaping into the network according to the invention). Upon preparation for consumption this amount of fat can change, e.g. (but not exclusively) for a product known as ramen noodle. Ramen noodle is subjected to a (deep)frying step, and thus takes up fat. The amount of mono- and disaccharides is preferably below 5% wt. The flour or semolina are preferably obtained from wheat. It may be preferred that the pasta consists essentially of: flour, or semolina, salt, water, egg (whole, whites, or yolk).

The invention furthermore relates to a process for preparing a ready-to-eat product comprising pasta, which process comprises the steps of heating a product according to the invention in an aqueous liquid and/or steam. Suitably, the product will be heated to a temperature of at least 80°C for at least 30 seconds.

### EXAMPLE

A conventional pasta dough was prepared having the following composition:
1000 g durum wheat semolina
26 g whole egg powder
350g water.
This dough was kneaded and prepared in a conventional way.

Said pasta dough was extruded using a rotary die, as is exemplified in figure 1 (upper picture:
counter-rotating concentric elements). The extrusion nozzles are located partly in the inner ring of the die, partly on the outer ring. By counter-rotating the nozzle holes of inner and outer ring alternatingly join or separate when in operation. Such extrusion dies are known from the plastic industry to form plastic nets or weavings. If this used whilst extruding a pasta dough, a network of pasta will be formed, in which thread-like elements will alternately join and
separate, thus forming a network. This network is shown in the picture on the right-hand side of figure 1. Optionally such network may be cut to the desired shape and size. Such network may be used as such or used for covering a filling material, thus forming a filled pasta element with macropores.

## Claims

1. Filled dried and rehydratable or deep frozen pasta product of which at least part is formed by a network of pasta, wherein the network at least partially covers a filling material, wherein the network comprises at least 2 (preferably at least 4) parallel filamentous pasta elements under an angle of 5-90 degrees to at least two (preferably at least 4) other parallel filamentous pasta elements, wherein the product should be heated in an aqueous medium or steam before consumption.

2. Product according to claim 1, wherein the filamentous element have a length of at least 2 mm and/or a diameter of at least 0.3 (preferably at least 0.6) mm.

3. Product according to claim 1-2, wherein the network has a regular repeating pattern.

4. Product according to claim 1-3, wherein the pasta comprises hard wheat flour or hard wheat semolina.

5. Product according to claim 4, wherein the hard wheat flour or semolina comprises flour or semolina from durum wheat.

6. Product according to claim 1-5, wherein the filling material comprises meat, cheese, egg, starch, vegetable matter, flavours, herbs, spices, bread crumbs, potato granules, fat, vegetable fibres, bouillon- or broth concentrate or mixtures thereof.

7. Process for preparing a ready-to-eat product comprising pasta, which process comprises the steps of heating a product according to claim 1-6 in an aqueous liquid and/or steam.

8. Process according to claim 7, wherein the product is heated to a temperature of at least 80°C for at least 30 seconds.

9. Process for preparing a filled dried and rehydratable or deep frozen pasta product according to claim 1-6, the process comprising at least the steps of:
- preparing at least two filamentous elements (a) and (b) of pasta by extrusion using a die having multiple openings wherein at least part of the openings are moved in a continuous or repetitive movement,
- intermittently joining the filamentous elements (a) and (b) to form a substantially continuous network by weaving, knitting, tying, braiding, twisting, spinning, knotting, interlocking, interconnecting, interweaving, web extrusion or combinations of such techniques,
- optionally cutting the resulting product,
wherein a filling is introduced after or simulateneous with the formation of the pasta network.

10. Process according to claim 9, wherein the rotating die has at least 4 openings on the interface between the two concentric elements.

11. Process according to claim 9, 10, wherein the filling is co-extruded with the pasta dough.
